# EUROPEAN PATENT SPECIFICATION

(11) **EP 2 444 929 B1**
(45) Date of publication and mention of the grant of the patent: **31.08.2016**
(21) Application number: 11185398.2
(22) Date of filing: 17.10.2011
(51) Int. Cl.: G06Q 30/02, H04L 29/08

(54) **Portable electronic device and method and social network and method for sharing content information**
Tragbares elektronisches Gerät, Soziales Netwerk und Verfahren zur Teilung von Information
Equipement portable, réseau social et procédé pour partager des informations

(30) Priority: 20.10.2010 US 405204 P; 21.10.2010 US 405644 P; 12.10.2011 US 201113271866
(43) Date of publication of application: 25.04.2012
(73) Proprietor: Sony Mobile Communications Inc., Shinagawa-ku Tokyo 140-0002 (JP)
(72) Inventor: Hansson, Emil, 221 88 Lund (SE); Lundgren, Lars-Gunnar, 221 88 Lund (SE); Österdahl, David, 223 52 Lund (SE)
(74) Representative: Zacco Sweden AB

(56) References cited:
- EP-A1- 1 536 352
- WO-A1-2007/148162
- US-A1- 2007 043 739
- US-A1- 2008 222 199
- US-A1- 2009 282 111
- US-A1- 2010 023 328
- MOO NAM KO ET AL: "Social-Networks Connect Services", COMPUTER, IEEE SERVICE CENTER, LOS ALAMITOS, CA, US, vol. 43, no. 8, 1 August 2010 (2010-08-01) , pages 37-43, XP011316851, ISSN: 0018-9162

## Description

### TECHNICAL FIELD

The present invention relates generally, as indicated, to a method and apparatus for sharing information about media from portable electronic equipment via a social network or other conveyance system, and, more particularly, to sharing such information and to facilitate one or more others accessing the information and facilitating their using, e.g., by purchasing, such media.

### BACKGROUND

Mobile and/or wireless electronic devices are becoming increasingly popular. For example, mobile telephones, portable media players and portable gaming devices are now in wide-spread use. In addition, the features and accessories associated with certain types of electronic devices have become increasingly diverse. To name a few examples, many electronic devices have cameras, text messaging capability, Internet browsing capability, electronic mail capability, video playback capability, audio playback capability, image display capability and handsfree headset interfaces. Exemplary accessories may also include headphones, music and video input players, etc.

To "like" a certain item on a social network, such as, for example, the FACEBOOK social network, it is possible to select, e.g., to click, a "like button" or icon, for a specific piece of content. The like button's main input is the URL to the "liked" content and when pressed your friends will see that you liked this content and they will have the possibility to go to the submitted URL by clicking or tapping on the FACEBOOK post. The term "like" may mean share, recommend, or desire to do either; it may mean love, hate, and so on, e.g., depending on the circumstance. A "friend" may be a person who views the social network page of another; friend may or may not mean that such viewing person actually has been accepted as a friend by the person whose social network page is being viewed.

Examples of "like buttons" exist in music services; however, they all are streaming based and, thus, the music service is in control of the actual music content. By having control of what is playing it is an easy thing for the service provider to add the necessary URL to the like button.

Many users of music players, mobile phones that play music or even record music, and other portable electronic devices and so on already have their own collection of music, but they usually would not have a URL that leads to a source for the music or to information about the music as do music services mentioned above. It is the common case for mobile or portable electronic devices to be used in a manner that allows the user to side load their music, to store it, and from time to time to play the music.

The International patent application No. WO 2007/148162 discloses a method for sharing content by "pushing" the content from a content sharing device to a user device.

The European patent application No. EP 1 536 352 discloses a system for accessing content items over a network. The system enables a consumer to access at least one content item, which is provided by one or more content providers, via a network.

### SUMMARY

There is no convenient way using a portable electronic equipment to share with others, e.g., with friends on a social network, information about liked music and to indicate liking of music. There is a problem in that, for example, there is a need for sharing and liking, e.g., indicating that a user likes, loves, recommends, etc. (collectively "like" in the description herein) music and desires to share that like with others, and this need is all the more significant on a communication centric device, such as a mobile phone. Another problem is there are no existing solutions to generate a URL corresponding to a given song that is liked by a user so that a friend, for example, or other individual may learn via a social network of the user's like of that song and obtain a proper copy.

Several, although not necessarily all, features and/or aspects of the apparatus and method hereof are, as follows:

An aspect of the invention relates to a method of sharing content information about content, not content itself, using portable electronic equipment, including selecting a like function that is provided via the portable electronic equipment to indicate that the content about which content information is to be shared is liked by a user of the portable electronic device; obtaining at the portable electronic equipement a first identifier of the liked content; based on the first identifier, obtaining from a database a second unique identifier, different from the first identifier, that identifies the location of the content information; and sending the second unique identifier of the liked content from the portable electronic device to the social network for posting on a social network for use by another person to obtain content information about the content.

Another aspect relates to the obtaining including preparing a unique identifier that identifies the location of the content information.

According to another aspect, the portable electronic device includes storage for media as the content, and wherein said selecting comprises selecting media stored in the portable electronic device.

According to another aspect, the portable electronic device includes a local database, and said obtaining comprises obtaining from the local database a unique identifier or information to prepare a unique identifier.

According to another aspect, the content comprises sounds sensed by the portable electronic device, and said obtaining a unique identifier, wherein the preparing step is comprises preparing a unique identifier based on the sensed sounds.

According to another aspect, the preparing a unique identifier includes preparing a fingerprint representative of the sensed sounds, and providing for comparing of the fingerprint against a database to try to find a match.

According to another aspect, the selecting, obtaining and sending are carried out using a mobile telephone and the sending includes sending via a network, sms (short message service), or email.

Another aspect relates to a portable electronic device, including a processor, a non-transistory memory, application code stored in the non-transitory memory, wherein the processor is configured to respond to the application code to respond to a LIKE input associated with a social network that indicates that a user of the portable electronic device liked the content to provide a first URL or ID (identification), the processor is further to configured to obtain, based on the first URL or ID, a second unique URL or ID, different from the first URL or ID, from a database, that identifies the location of the content information to obtain content information about the liked content, where the content information is to be shared via the social network, and the processor further configured to provide the second unique URL or ID of the liked content from the portable electronic device to the social network for posting on a social media network , via a link, for access by one or more other person to the content information.

Another aspect relates to an input for a user to provide a LIKE indication to indicate liking a content.

Another aspect relates to a media player and wherein the content is music playable by the media player.

According to another aspect, the processor is configured to create the unique URL or ID.

These and further aspects and features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated in size, e.g., made larger in relation to other parts than in an exemplary device actually made according to the invention. Elements and features depicted in one drawing or embodiment of the invention may be combined with elements and features depicted in one or more additional drawings or embodiments. Moreover, in the drawings, like reference numerals designate like or corresponding parts throughout the several views and may be used to designate like or similar parts in more than one embodiment.

### BRIEF DESCRIPTION OF THE DRAWINGS

In the annexed drawings:
FIG. 1A is a schematic illustration of a portable electronic equipment (also referred to as portable electronic device) and use thereof in connecting with a social network via a network, such as, for example, the Internet;
FIG. 1B is a schematic block diagram illustrating exemplary steps of a method that may be followed according to an embodiment;
FIG. 2 is a schematic illustration of an example of information seen by a person who receives the shared information, e.g., a viewer of the subscriber's home page on the social network, e.g., a so-called "friend";
FIG. 3 is a schematic diagram illustrating the interaction of a portable electronic equipment and a remote server, e.g., not within the portable electronic equipment, carrying out an embodiment of the invention;
FIG. 4 is a schematic computer program flowchart or logic diagram illustrating representative steps, functions or operations carried out in accordance with an embodiment;
FIG. 5 is a schematic diagram illustrating the interaction of a portable electronic equipment and a remote server, e.g., not within the portable electronic equipment, carrying out another embodiment;
FIG. 6 is a schematic computer program type flowchart or logic diagram illustrating representative steps carried out in accordance with another embodiment; and
FIG. 7 is a schematic illustration of parts of a portable electronic equipment, such as a mobile phone, which may be used in carrying out the invention on the "handset side."

### DESCRIPTION

In the following description various aspects and embodiments of the invention are describe, one being, for example, with respect to enabling social sharing of information about local music content, e.g., that stored on a portable electronic device ,by creating a unique URL based on acoustic fingerprinting or based.on another unique identification of the content; the unique URL may be shared via a social network with others who may select, e.g., click on, etc., to cause the unique URL to be resolved to obtain information about the content.

The interchangeable terms "electronic equipment" and "electronic device" include portable radio communication equipment. The term "portable radio communication equipment," which hereinafter is referred to as a "mobile radio terminal," as "portable electronic equipment," or as a "portable communication device," includes all equipment such as mobile telephones, audio and/or video media players, pagers, communicators, electronic organizers, personal digital assistants (PDAs), smartphones, portable communication apparatus, and others mentioned herein or may come into existence in the future, or the like.

In the present application, embodiments of the invention are described primarily in the context of a mobile telephone. However, it will be appreciated that the invention is not intended to be limited to the context of a mobile telephone and may relate to any type of appropriate electronic equipment, examples of which include a media player; a gaming device, PDA and a computer, and others mentioned herein or may come into existence in the future, etc.

The terms media, music, song, content, text, video, music video, and so on may be used interchangeably and equivalently herein unless otherwise apparent or suggested by context. For brevity the description below mostly will refer to content, media, a song, track (of an album) or to music as illustrative.

Social network generally refers to a social network of a type similar to that offered under the FACEBOOK™ trademark or another social network in which a user may connect with friends, post information, read information from others, e.g., friends, e.g., as is done in the FACEBOOK social network. Another example of a social network that may be less widespread as the FACEBOOK social network is offered under the trademark LIVINGSTON NAVIGATOR by the West Essex Tribune newspaper of Livingston, New Jersey.

In some social networks, such as the FACEBOOK social network, a subscriber also referred to as a user, may have a home page, and one or more others, e.g., friends, may visit the subscriber's home page and possibly other pages of the subscriber, review content on those pages, e.g., posted information, sometimes referred to as "posts," to view them, access them, and so on.

As is described in greater detail below, a user of a mobile phone can tell something about the user's content on the mobile phone and can identify that content and put it in the social network context. Content, e.g., music, may be contained, e.g., stored, on the user's mobile phone, and the user can share information about that content on various social networks. The information that is shared is information about the content, but ordinarily is not the content itself.

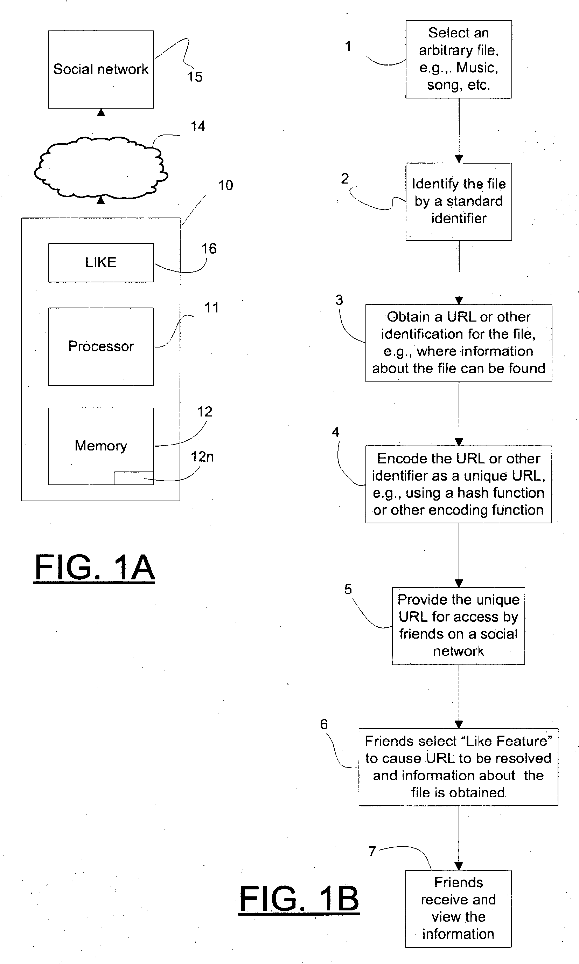

Turning, now, to the drawings, wherein like reference numerals designate like parts in the several figures, and initially to Fig. 1A, a portable electronic equipment, which is referred to below sometimes as portable electronic device, mobile phone, cell phone, music or video player, or the like, is illustrated at 10. For convenience, the portable electronic equipment 10 will be referred to in the description below mostly as a mobile phone. However, it will be appreciated that features of the invention may be carried out using other types of portable electronic equipment, such as, for example, music player devices, portable or handheld computers, personal digital assistants, others mentioned herein, and so on. Also, in the interest of brevity, the portable electronic equipment 10 (mobile phone) is illustrated and described with respect to Fig. 1A, for example, as including a music player or media player 10a, which, of course, may be another type of player such as a video player, display, and so on; all of which may be conventional player and display features of many modern mobile phones.

The portable electronic equipment 10 may be used to share content information about content, e.g., music, audio content, video content, and so on; and by sharing the content information it may be possible to share the content itself. For example, if a user of the portable electronic equipment shares content information with another, e.g., with another person, and that other person uses the content information to identify the content, that other person may acquire the right to use the content, e.g., to play a song, to view a movie, to listen to a book, and so on, by purchasing the content from an authorized vendor. Summarizing one aspect of the features described herein, using the portable electronic equipment 10 a user may select content. A unique identifier of content information relevant to the content and where that content information can be found is obtained, e.g., from a database or memory storage in the portable electronic device, by accessing information from a remote device, e.g., a server, or by some other manner. The unique identifier is provided, e.g., is sent, transmitted, or the like for use by another, e.g., another person, to obtain content information. For example, the unique identifier can be sent for posting on the user's (i.e., the user of the portable electronic equipment) social network page, e.g., a Facebook page, and another person may execute a "LIKE" selection or function of that posting that would cause the unique identifier to be resolved and used to gain link to a source of the content information, e.g., a server containing the content information. "LIKE" selections or functions are well known capabilities of social media web pages, e.g., a "like" function that is available and used on Facebook web pages. For example, a "like" function may be activated or selected by a person accessing a Facebook web page to indicate that the person likes, is interested in, etc. a given item posted on the web page, e.g., such as a picture, news story, video, comment, and so on.

Additional methods and apparatus in accordance with various aspects of the invention are described further below.

One technique to identify a piece of music is use of an acoustic fingerprint technology. The fingerprinting algorithm typically looks at the waveform of the music and creates a representation of a specific part of the waveform in some form of data. The fingerprint serves as an index or entry towards a database, and if a match with the fingerprint is found in the database, more extensive information about the song can be found out about the song. For instance such more extensive information may be song title, artist name, album(s) on which the songs appears, etc.

For the "like" function or use described herein a URL is needed and this could for instance be based on the fingerprint itself, another unique identifier such as the International Standard Recording Code (ISRC), an arbitrary alphanumeric value, a hashed value, a file name and path where the song is stored in the mobile phone, metadata or other information concerning title, artist, album, etc. and so on. An exemplary unique URL may be: http://trackid/24hs65ls9h7m. The URL should uniquely pin point the piece of music as is described herein.

As another example, as was mentioned just above, the actual filename and path where the song is stored in the user's mobile phone could be used to generate the URL. For instance /Lady Gaga/The Fame Monster/bad_romance.mp3 could in a straight forward way be encoded as http://track.id/index.html? artist=lady+gaga&album=the+fame+monster&song=bad+romance:

It would also be possible to directly generate an ID by encoding or hashing one or more of the file path, metadata, song title, artist and album, and so on.

Another way to generate a unique URL or ID would be to use any existing metadata such as id3 tags and in the same way as for the file path generate the URL or ID.

A combination of any or all of the above mentioned solutions could also be seen as possible for generating the unique URL.

Implementation of fingerprinting to create a unique URL for posting on a user's home page on a social network could be used for any music source in the mobile phone. The music source could be an FM Radio of the mobile phone where users could press "Like" or it could even be a third party service like Spotify where a fingerprint could identify what is playing and the UI (user interface) could display a like button for liking the content. It also is possible that music from a source outside the mobile phone, e.g., being played in a public environment, may be sensed by the mobile phone, e.g., picked up or sensed by the microphone or other sensor of sounds or audible information, such as microphone 111 mentioned below, thereof; and a fingerprint of that music could be created, identified and a unique URL created for posting.

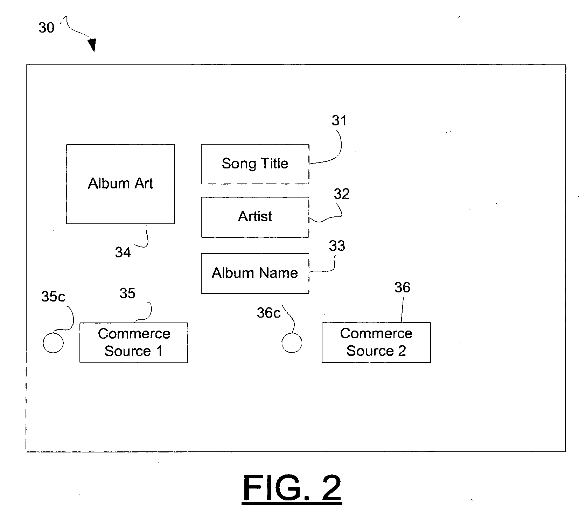

The user of a mobile phone can place the unique URL on the user's (subscriber's) page (e.g., home page) on a social network when the user selects the like application or function of the user's mobile phone. For convenience that placed unique URL on the social network page may be referred to herein as "like feature." A person who views that social network page may select the like feature icon, which would cause the unique URL to be resolved to lead to a source from which information about the song is acquired and is placed on the viewer's display, e.g., web page being viewed. For example, the information, such as artwork of the album in which the song is contained, the title of the song, the artist singing or playing the song, the name of the album and possibly other information may be provided. Such information may be provided from a database of songs and information about them; and the information may be applied into a template design or page that is shown to the viewer, as is described below with respect to Fig. 2.

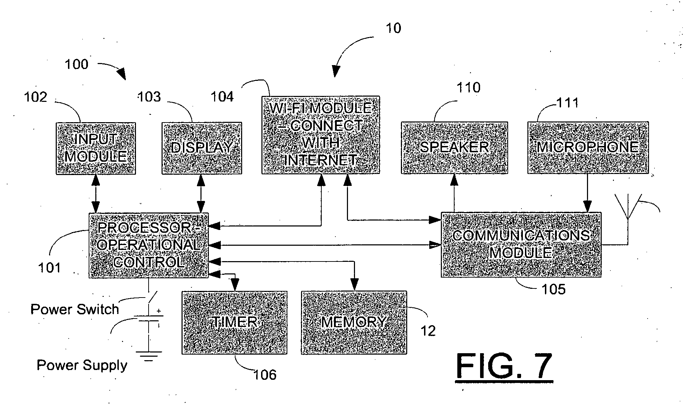

The mobile phone 10 includes various circuitry, which is described below with respect to Fig. 7, and that circuitry carries out various functions, for example, those functions that are typical of a mobile phone. The mobile phone 10 includes a processor 11, and a memory 12. The processor is configured to function in accordance with various computer program instructions or the like that are provided by the memory, via other input/output devices, such as a keypad, received signals, such as an incoming telephone call, incoming SMS, email, and so on. The mobile phone also includes a keypad that may be composed of a number of buttons or may be a keypad that is illustrated on a display of the mobile phone, as is known in the Sony Ericsson XPERIA X10 mobile phone, for example.

The memory 12 includes a non-transitory memory portion 12n in which application code, e.g., instruction set, logic steps, instructions, and so on may be stored and may be used to configure and to operate the processor 11 and/or other parts of the mobile phone 10 as is known. The memory 12 also may provide for storage of, e.g., may store, data, such as content, music, videos, etc., as is conventional. Additionally, the non-transitory memory includes code to carry out the various functions and operations that are described below. The various programs, code, steps, etc., described herein may be stored as code, logic, etc., in the non-transitory memory 12.

As is illustrated in Fig. 1A, the mobile phone 10 may be connected via a network 14, such as, for example, the Internet or some other network, and via that network to a social network 15, such as, for example, the FACEBOOK social network or another social network. Another example of a social network is one provided by the West Essex Tribune newspaper in Livingston, New Jersey.

A "like button" 16 is included in the mobile phone 10, as is seen in Fig. 1. The like button may be a separate key or push button that may be pressed by a user, it may be an icon that may be touched, pressed or otherwise selected by a user, and so on. The like button 16 may be operated for the purpose of designating a song, text, picture, movie, other image, or any other media, and so on, as being "liked" by a user of the mobile phone 10. By pressing or otherwise selecting the like button 16, the user of the mobile phone 10 may cause to be sent via the Internet 14 a designation, such as a "like" feature to the social network 15 so as to appear, for example, on the user's page or the like on that social network. The like feature includes a unique URL or other identification (sometimes referred to as URL/ID) that can be resolved to provide a person who selects that like feature at the user's social network page information about the song, content, etc. Information also may be provided to the person selecting the like feature of a manner in which the song or the like may be obtained for playing, e.g., by a link to a sales or commerce entity, such as, for example, Amazon.com, iTunes or the like where the song may be purchased, whereby authorization or permission would be provided to use, play, display, perform, etc. the content, media or the like.

Thus, it will be appreciated that the user of the mobile phone may listen to a song and decide to share his or her like of the song with others. By pressing the like button 16 on the mobile phone 10, then, the user causes a like feature to be placed on his or her social network page so that others who view that page may see the like feature and may select it to obtain information pertaining to the song; and such viewing person may acquire, e.g., purchase, the song for his or her own listening pleasure.

The content, e.g., the song, which is local content on the mobile phone and is not associated with a webpage to start initially, is shared in the form of the unique URL that can be resolved to obtain information about the content, e.g., about the song, music, and so on. Thus, in contrast and as compared to an IMDB (Internet Movie Database) in which the movie already is available on and accessible from a webpage, the unique URL described herein that may be posted as a "Like Feature" on a user's home page of a social network leads to information about the content, not the content itself. For example, in creating the unique URL for a song, it may be created through pinpoints of a specific track of an album, and, the track for that song may be purchased appropriately by the "friend" who accessed the like feature on the user's social network home page and then listened to.

Fig. 1B illustrates a flow chart or logic diagram of several steps or procedures that may be carried out.

At block 1 an arbitrary file, e.g., a song, on the mobile phone 10 is selected. At block 2 the selected file is identified by a standard identifier. At block 3 a URL or other identification for the file is obtained, e.g., where the information about the file is to be found. The information for the file (song) may be found in a database of such files (songs). With an appropriate identification of the song, e.g., its ISRC or other identification, such information may be addressed from an available database. One example of such a database is available under the trademark GRACENOTE. Other databases are offered under the names or trademarks ROVEE, SHAZAM, SECOND HAND or OPEN SOURCE. A database for such information may be offered by commercial music businesses, e.g., physical and/or online. If the ISRC or other standard identifier code is not found or is not available, other information may be used as an identifier for the song, such as metadata, title, artist, album, and so on, as is mentioned herein. That identifier may not be available at the current time that it is searched for, e.g., a song has not yet been entered into one of the standard databases mentioned above, but at some future time it may be entered or the identification information (metadata, title, artist, album, and so on) may be sufficient at a future time to identify the song. Moreover, the information about the song may be in a special database that is prepared by the owner or user of the mobile phone or by someone else and made available, for example, under circumstances that the song cannot otherwise be identified by a standard code so as to be found in an existing database of songs and information about the songs. As an example, the user of the portable electronic device 10 may provide a user input relative to the content or the content information to the portable electronic device to identify the content or content information; that input may be provided, for example, by the user entering the relevant information manually using a keypad of the portable electronic device.

At block 4 the URL or other identifier is encoded, e.g., using a hash function or some other function, to provide a unique URL. At block 5 the unique URL is provided, e.g., posted, to a social network page, e.g., to the user's home page on the social network where friends may access, e.g., select, the post as a like feature of the user. An example of a unique URL or ID is "http://trackid/24hs65ls9h7m" as is mentioned in an example above. At block 6, which occurs at the social network, a friend (e.g., a person viewing the user's social network page) selects the like feature that was placed or posted thereon by the user of the mobile phone. That selecting causes the unique URL or other ID to be decoded and to be resolved and with access to a server, such as for example, the TRACKID server (note the reference to the TRACKID server in the unique URL, e.g., "http://trackid/..."), the identification of the song can be made. That identification may be provided to an identifier database of song information, e.g., a GRACENOTE database or other database, such as, for example, one mentioned above or another to obtain information about the song. At block 7 the information is conveyed to the friend, e.g., by displaying the information about the song on the friend's display, computer or the like. The friend may review the information and may elect to purchase the file, e.g., a song.

Briefly referring to Fig. 2, a "screenshot" 30 shows illustrative information about a song displayed to a person (friend) who has visited the user's social network page and selected the like feature there. As can be seen, the basic information about of the song is shown, including title 31, artist 32, album name 33 and even artwork from the album cover 34. At areas 35 and 36 information indicates how the song can be acquired by the friend, e.g., by purchasing from a commerce source, such as from Amazon, from iTunes, etc. Respective click buttons 35c, 36c may be selected by the friend to go to the respective commerce source to purchase the song. Advertising also may be provided on the displayed information page, as may be desired.

Summarizing, then, a user of the mobile phone 10 may press the like button 16 to indicate that the user likes a song. Information then is provided to the user's home page as a like feature that can be selected by a friend of the user that visits the user's page on a social network, such as FACEBOOK, for example. The selecting of the like feature at the user's social network page provides a unique URL/ID (uniform resource locator or identification) that may be resolved to obtain information, such as, for example, that illustrated in Fig. 2 that can be viewed by the friend. The friend then may purchase the song, may listen to a short portion of the song, if that is permitted, and so on. The friend also may see others who may have selected the like feature when visiting the user's home page.

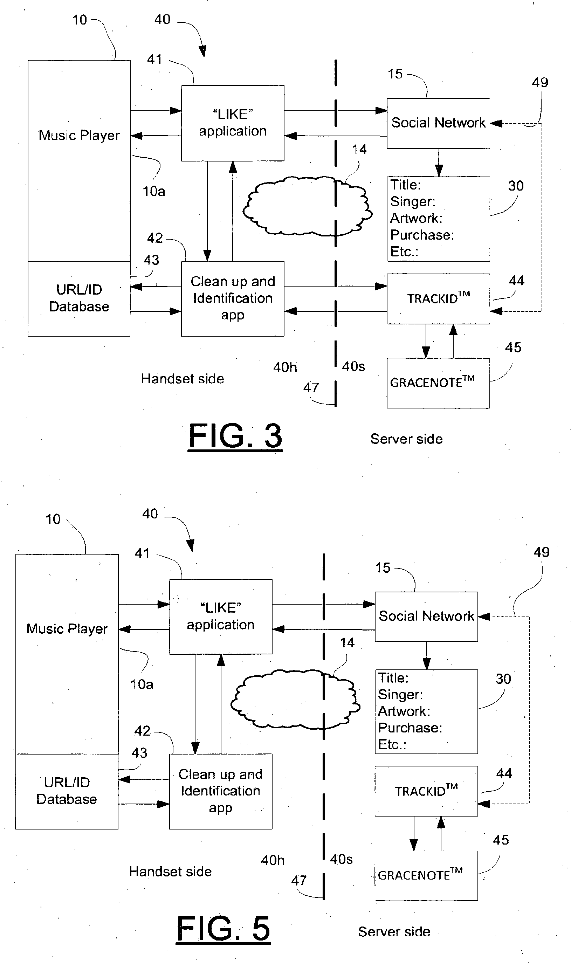

In Fig. 3 is illustrated a schematic block diagram 40 of a representation of interaction of various functions and operations both in the mobile phone 10 and remotely of the mobile phone, e.g., at the social network 15 and one or more other servers, information databases, and so on, respectively referred to as the handset side 40h and the server side 40s shown separated in space by line 47. The handset side and server side may be functionally interactive via the internet 14, e.g., as is described herein.

In the block diagram of Fig. 3, at the upper left is the music player 10a of the mobile phone 10; the music player or other type of player 10a may be a function of software stored in memory 12 and executed by the processor 11 (Fig. 1A) of the mobile phone 10. When a user is listening to something, a like button 16 is presented to the user or is available all or at other times, too. Pressing the like button will connect to or initiate the like application 41 to cause steps to be carried out to identify the song via a unique URL and to cause a like feature to be posted to the user's social network page. For example, initiating the like application calls the cleanup and identification application 42, which would check if the unique URL for this song is in the URL/ID database. If the song already is stored in the mobile phone 10 memory, possibly appropriate identifying information of the song, e.g., metadata or some other code, the title, artist, etc., may be used for a comparison with database records in the URL/ID Database 43. The URL/ID Database stores for respective songs a unique URL associated with that song. The unique URL when resolved may link to a server, e.g., a song identifier server or database such as the GRACENOTE database referred to above or other such identifier database where information about the song may be obtained, e.g., title, artist, album, album art, etc. Regardless of the technique to search for the song in the URL/ID database 43, the effort is made to determine whether the song is "known" and, thus, is found in that database. If it is, then the unique URL for that song is provided for posting on the user's social network page.

The URL/ID database 43 may be part of the mobile phone 10, e.g., stored in memory 12. Also, the like application 41 and the clean up and identification application 42 may be part of the mobile phone 10, e.g., stored as code in the non-transitory memory 12n.

In the case that the unique URL is not stored in the URL/ID database 43, e.g., the song being listened to is not known, then steps are taken to try to identify the song. One example of a technique to identify the song is to use fingerprint technology wherein a fingerprint of at least part of the song is created and that fingerprint is compared against a database of other fingerprints of songs to try to find a match. An example of such a database is mentioned above as the GRACENOTE database and others. Those databases contain information that identifies the songs by way of specific codes, e.g., ISRC, and also may include other information about the songs, such as, for example, title, artist, album(s), album artwork, sources for purchase, and so on.

Thus, a fingerprint or some identification algorithm is run for the above-mentioned unknown song, e.g., to generate a fingerprint representation of at least part of the song. When the fingerprint is generated, it is sent via a server 44 to the identifier database 45. In the illustration of Fig. 3 the server 44 is a TRACKID server of Sony Ericsson Mobile Communications AB, and the identifier database 45 is the GRACENOTE database; but others may be used for each or a single one may be used for each.

If the identifier database 45 recognizes the song by the fingerprint, it will provide back information identifying what song it is and a unique identifier for this song. Based on that identifier, a unique URL can be created using various techniques, e.g., a hash function, another encoding function or virtually any other way, to be a representation of that song that would be unique. The TRACKID server 44 and/or the clean up and identification app 42 may create and/or provide that unique URL.

The unique URL may be stored in the URL/ID database 43 so the next time the song is searched for therein, it would be found as a known song. For example, the fingerprint of the song and the unique URL may be stored in the URL/ID database 43 to enable finding of the song in a subsequent fingerprint search.

The clean up and identification application 42 returns this unique URL to the like application 41 from which it may be posted as a like feature at the user's social network site, e.g., the user's FACEBOOK home page.

In the FACEBOOK social network case, for launching a like feature from the user's home page, a friend may press the like feature icon, and the friend would be shown whatever information is provided from the site the unique URL points to, e.g., to a TRACKID server that provides a template for showing information to the friend and populate the template with information pertaining to the relevant song, e.g., title, artist, album, and so on, and various options for purchasing this song, and so on.

Thus, it will be appreciated that selecting the like feature on the user's home page on his/her social network the unique URL representing the liked song will be sent to a TRACKID server to be resolved; and from there information may be provided the friend about the song. The information so provided may include a link to a sales entity, such as, for example, Amazon or iTunes, from which the song may be purchased.

As is illustrated in Fig. 3, in the block diagram 40 the mobile phone may be used as a music player and it is considered the "owner" of what is playing on the mobile phone. What is playing on the mobile phone may be a song that has been stored in memory of the phone, The song playing on the mobile phone 10 also may be a song that is being "listened to" and is provided from another source, e.g., the user may be in a public venue listening to some music. The user likes the music and may operate a feature on the mobile phone to learn information about the song. Alternatively, the user may be listening to music via a radio feature, e.g. an FM radio, of the mobile phone 10. The mobile phone 10, is the interface toward the user for liking or unliking something. Thus, the user may create a like feature on FACEBOOK or may remove, e.g., "unlike," a like feature from FACEBOOK that the user had placed there previously.

When the user of the mobile phone 10 presses a like button 16 (Fig. 1) a like application 40 is called into play. The like application is the communication central or connecting feature toward the social network, e.g., FACEBOOK social network. The like application also has the role to ask the cleanup/identification application 41 to provide a URL for a specific song, e.g., a specific track on an album, etc. Thus, a connection is provided in the block diagram of Fig. 3 between the like application 41 and the cleanup and identification application 42.

The cleanup and identification application 42 includes an algorithm for creating a fingerprint. It can either operate instantly by request from the like application for a specific track (song) or it can in the background analyze the entire collection of music in the mobile phone 10, e.g., stored in memory, such as the non-transitory portion or a transitory portion of the memory 12 (Fig. 1). The fingerprint is a signal representation of at least a portion of the track. The cleanup and identification application 42 also may provide identification information, such as a URL or other identification where information concerning the track can be obtained, such as, for example, information illustrated in Fig. 2. The information may be provided to a URL/ID database 43, as is shown by a connection from the cleanup and identification application 42. Furthermore, the URL/ID database stores the identifications and URL's for the local music that is stored on the mobile phone 10. The URL and/or ID information may be obtained from metadata or from other information, such as title, artist, etc. stored in the file of the track itself.

More specific information may be obtained to identify the track by a connection from the cleanup and identification application 42 to a TRACKID™ server 44. The TRACKID server may be remotely located relative to the mobile phone and may be connected to the mobile phone via an Internet connection or some other connection, e.g., wired, wireless or both. The TRACKID server furnishes the fingerprint obtained at the cleanup and identification application 42 to an identification server 45. The song identification server, device or database 45 may identify the track based on the fingerprint for the track. The identifier device 45 also may identify the track by metadata, for example, if the medium being considered is text. The identifier device 45 device returns to the TRACKID server 44 a unique identifier for the track. That unique identifier would be, for example, a standard identifier for a song or other medium. An example is the International Standard Recording Code (ISRC). An example of such an identifier device 45 is that available under the trademark GRACENOTE. For example, a GRACENOTE database includes identification information for many different songs, text and/or other media.

Thus, as was mentioned before, when a fingerprint and/or metadata is received by the TRACKID server from the GRACENOTE database, the TRACKID server creates a unique URL/ID for the media. That unique URL/ID is provided the cleanup and identification application 42. Since the song had not previously been known or found in the URL/ID database 43, the song and its URL/ID are provided for storage in the URL/ID database. The cleanup and identification application also provides the unique URL to the like application 41, which in turn provides the unique URL/ID to the social network 46, e.g., FACEBOOK. The user pressing a like button in the music player 10 causes the like application 41, then, to "post" the like feature on the FACEBOOK page of the user including the URL and the artist and song name. The information concerning the artist and song name may have been obtained from the GRACENOTE database and provided via the TRACKID server to the cleanup and identification application 42, as was described above.

Thus, the user of the mobile phone 10 pressing the like key 16 causes a like feature to be placed on the user's FACEBOOK page. When a friend accesses that like feature, the friend will be linked 49 via the URL, when it is resolved, to receive information concerning the song and permitting the friend to acquire the song for his or her own listening pleasure. The information shown at 30 may be obtained, for example, via a link and cooperation between the social network 15 and the TRACKID server 44 and/or the song identifier server 45 based on the unique URL as it is resolved and information about the song is obtained, for example, from the server 44 and/or identifier device 45 to be shown at 30.

The like application 41 also synchronizes the like statuses of what the user may have liked with FACEBOOK since the user can like or unlike on FACEBOOK outside of the handset as well as via the handset. Thus, there may be a synchronizing of like and unlike items, some of which may be provided via the handset (mobile phone) 10 and some of which may have been provided via a direct Internet connection from a personal computer, for example, or the like.

It is noted here that reference to the TRACKID server 44 and to the GRACENOTE database 45 are used as examples. Other devices, databases, programs and the like that provide the same or similar functions as those mentioned for those identified by reference numerals 44 and 45 may be equivalently used and substituted.

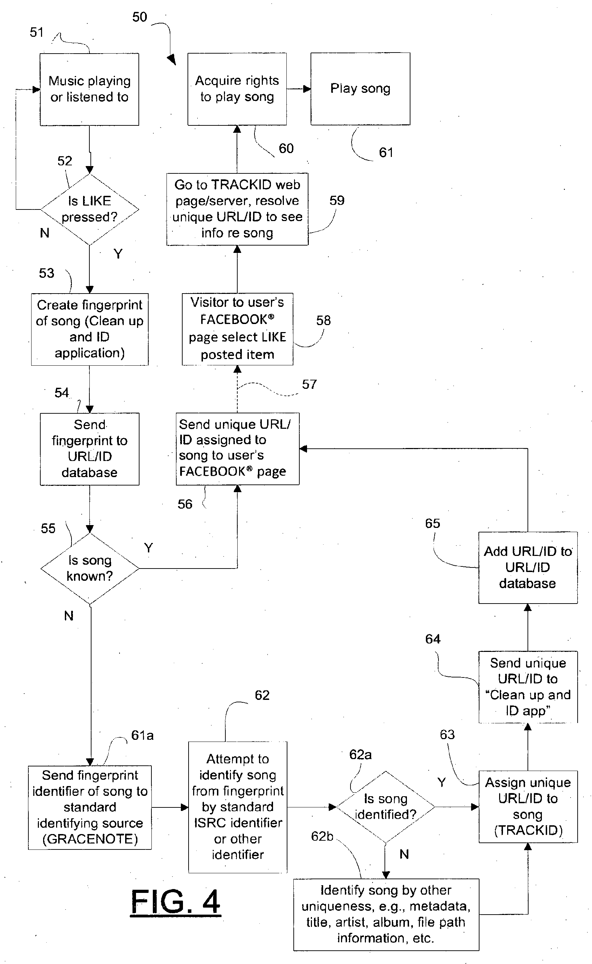

Fig. 4 is a computer program logic diagram or flowchart 50 that includes the number of steps represented at respective blocks. The logic steps may be carried out as part of the applications, such as, for example, functions in the mobile phone 10, the like application 41, the cleanup and identification application 42, and so forth as is described elsewhere herein. At block 51 music is playing or being listened to by the mobile phone. At block 52 an inquiry is made whether the LIKE button 16 has been pressed. If no, then a loop is followed back to block 51. If yes, then at block 53 a fingerprint of the song is created via the cleanup and identification application 42 (Figs. 4 and 5) and that fingerprint is sent at bock 54 to the URL/ID database 43 to see whether the song is known (block 55), e.g., has the song and information concerning it been stored in the URL/ID database 43. From block 55 the unique URL/ID assigned to the song is furnished (block 56), e.g., via the cleanup and identification application 42 to the like application 41 (Fig. 3), and from there, a link 57 may be provided to the Internet, as is represented by the dashed line 57. The link 57 causes a like feature to be placed on the user's home page on the FACEBOOK social network. Therefore, at block 58 a visitor to the user's FACEBOOK home page may select the LIKE feature, also referred to as a posted item. Upon making such a selection of the like feature, at block 59 a link is provided to the TRACKID webpage/server to resolve the unique URL/ID to see, e.g., to obtain and to display, information about the song. The information is displayed, e.g., as shown at 30 in Fig. 3, to the visitor to the user's FACEBOOK page. At block 60 the visitor may acquire rights to play the song, e.g., by clicking on a purchasing site, such as, for example, Amazon, iTunes, or the like, and at block 61 the visitor may play the song.

If at block 55 it is determined that the song is unknown, i.e., the fingerprint that had been sent to the URL/ID database 43 did not match with any of the songs stored therein, e.g., did not match with any of the fingerprints for the respective songs stored therein, then at block 61a the fingerprint identifier of the song is sent to a standard identifying source, such as a GRACENOTE database or some other database that provides the identification of a URL for that song. At block 62 an attempt is made to identify the song by such standard identifying source, e.g., GRACENOTE database, and, if successful (via block 62a) the identifier for that song is provided. At block 63 a unique URL/ID for the song is assigned to represent the song via the TRACKID server. If at block 62a it is determined that the fingerprint did not lead to identification of the song by the GRACENOTE server and database, then at block 62b unique identification is provided by another technique, e.g., via metadata included in the song file, title of the song, artist, album, or by file path information, e.g., where the file is stored in the mobile phone, etc. The flow chart then continues to block 63 as describe above.

At block 64 the unique URL/ID is sent to the cleanup and ID application 42, and from there it is added at block 65 to the URL/ID database 43. Then the flowchart continues at block 56, as was described above.

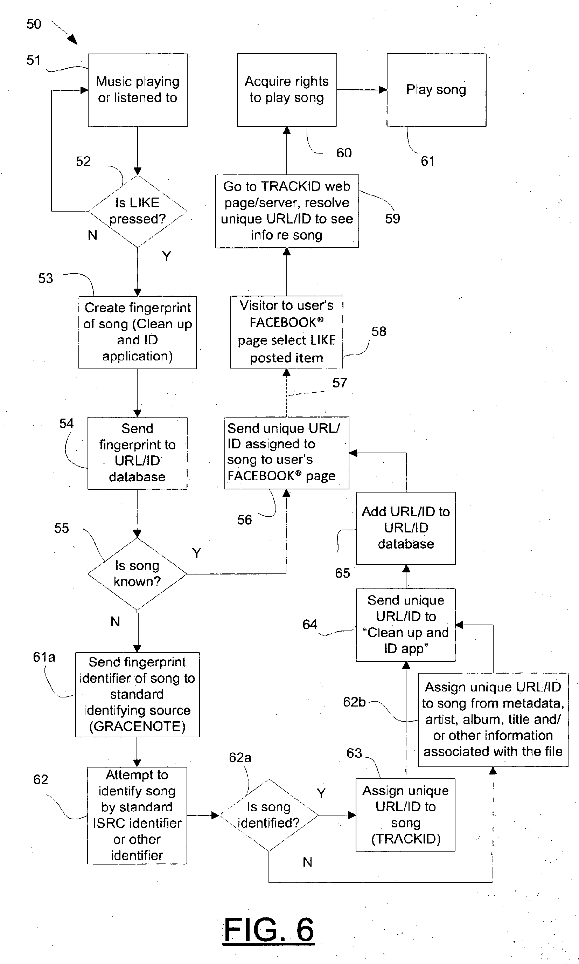

Figs. 5 and 6 are similar to Figs. 3 and 4 except that there is no use of the TRACKID server 44 and GRACENOTE identifier server 45 feature directly associated with creating the identification of the song and assigning a unique URL to the song at the mobile phone 10 on the handset side 40h. Rather such parts 44 and 45 may be used at the server side 40s, as was described above.

It is noted that the unique URL discussed above not only can be provided a "friend" via a social network but also or alternatively may be provided via an SMS communication, email communication, and so on.

Fig. 7 illustrates exemplary operating circuitry 100 of the mobile phone 10. Such operating circuitry includes a processor 101 that provides operational control of the mobile phone based on computer code, instructions and/or the like contained in the memory 12 and or external inputs, e.g., from a keyboard, touch screen, etc. 102. The operational circuitry includes a display module 103, e.g., including a display. The display may be used to provide a virtual keypad, actual buttons, such as a "like" key, function or selection, and so on, photographic or other images, videos, movies and the like for viewing, and so on. A Wi-Fi module 104 or other device to connect with the internet is provided for communication with the processor 101 and possibly also with the communications module 105. For example, the Wi-Fi module may be used in providing connection to the Internet via which the above-described posting of a unique URL/ID or other identifier on a social network page, a sending of an email communication or sms, and so on can be carried out. A timer 106 may be provided. Also, a speaker 110, and microphone 111 are provided for usual mobile phone functions.

Operation of the mobile phone 10 may be under computer program control or the like. Such operation may be as is performed to carry out the functions of a mobile phone and the various steps, operations and procedures described above may be carried out under computer program control or the like.

It will be appreciated that portions of the present invention can be implemented in hardware, software, firmware, or a combination thereof. In the described embodiment(s), a number of the steps or methods may be implemented in software or firmware that is stored in a memory and that is executed by a suitable instruction execution system. If implemented in hardware, for example, as in an alternative embodiment, implementation may be with any or a combination of the following technologies, which are all well known in the art: discrete logic circuit(s) having logic gates for implementing logic functions upon data signals, application specific integrated circuit(s) (ASIC) having appropriate combinational logic gates, programmable gate array(s) (PGA), field programmable gate array(s) (FPGA), etc.

Any process or method descriptions or blocks in flow charts may be understood as representing modules, segments, or portions of code which include one or more executable instructions for implementing specific logical functions or steps in the process, and alternate implementations are included within the scope of the preferred embodiment of the present invention in which functions may be executed out of order from that shown or discussed, including substantially concurrently or in reverse order, depending on the functionality involved, as would be understood by those reasonably skilled in the art of the present invention.

The logic and/or steps represented in the flow diagrams of the drawings, which, for example, may be considered an ordered listing of executable instructions for implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

The above description and accompanying drawings depict the various features of the invention. It will be appreciated that the appropriate computer code could be prepared by a person who has ordinary skill in the art to carry out the various steps and procedures described above and illustrated in the drawings. It also will be appreciated that the various terminals, computers, servers, networks and the like described above may be virtually any type and that the computer code may be prepared to carry out the invention using such apparatus in accordance with the disclosure hereof.

Specific embodiments of an invention are disclosed herein. One of ordinary skill in the art will readily recognize that the invention may have other applications in other environments. In fact, many embodiments and implementations are possible. The following claims are in no way intended to limit the scope of the present invention to the specific embodiments described above. In addition, any recitation of "means for" is intended to evoke a means-plus-function reading of an element and a claim, whereas, any elements that do not specifically use the recitation "means for", are not intended to be read as means-plus-function elements, even if the claim otherwise includes the word "means". Although the invention has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

Several, although not necessarily all, features and/or aspects of the apparatus and method are summarized below:

A method for sharing content information via a social network, including prepare a unique URL or other identifier that identifies content, and cause the posting of the unique URL on a social network to be resolved to provide information to others about the content.

A method for receiving content information concerning a related content via a social network, including selecting a post on the social network that provides a unique URL or other identifier capable of being resolved to identify a source of the content information, obtaining from the source the content information, and providing for at least one of displaying or using the content information.

A method of preparing a unique URL for a content, including providing information representative of the content to an identifier database, creating a unique URL representative of the content for subsequent resolving for use to obtain information about the content.

A method of connecting local music or local content to a social network (e.g., FACEBOOK) or other conveyance (e.g., sms, email etc.), including identify the local music or local content, send a unique identifier to the social network or via another conveyance, wherein the unique identifier is configured as a unique URL that when visited would provide information about the local music or local content.

To complete the connection of the preceding method, information about the local music or local content may be obtained using the unique URL, and permission may be obtained once the information is obtained.

A method of identifying media, includes in response to a fingerprint or metadata received representing media or content, creating a unique URL, and providing the unique URL via a social network or other conveyance to identify the media or content.

A portable electronic device, includes a processor, a memory containing application code, the processor configured in response to the code to respond to a LIKE input, the processor further configured to create a fingerprint of at least a portion of the media, the processor further configured to identify the media and to provide information identifying the media for use via a social network or other conveyance.

A portable electronic device, includes a non-transitory memory, application code stored in the non-transitory memory, a processor, wherein the processor is configured to respond to the application code to respond to a LIKE input with respect to media to identify the media with a unique URL or ID, and the processor further configured to provide the URL or ID to one or more others via a social media network or other conveyance.

A social media network, includes respective pages of respective users, a media LIKE link associated with and displayable on a respective page, the LIKE link including a URL or ID configured to connect with a source of information about the media.

A method of handling a URL or ID via a social network or other conveyance, wherein the URL or ID represents media that is LIKED, and selecting the URL or ID (by clicking or putting into browser).

A method of linking to media or content intended to be shared, wherein the media or content is identified by a unique URL or ID, includes forwarding the URL or ID to a social network or other conveyance (SMS, email, etc.)

## Claims

1. A method of sharing content information about content using portable electronic equipment (10), comprising
selecting (1) a like function (16) associated with a social network (15) that is provided via the portable electronic equipment (10) to indicate that the content about which content information is to be shared via the social network (15) is liked by a user of the portable electronic equipment (10);
obtaining (2) at the portable electronic equipment (10) a first identifier of the liked content;
based on the first identifier, obtaining (3) from a database a second unique identifier, different from the first identifier, that identifies the location of the content information; and
sending (5) the second unique identifier of the liked content from the portable electronic device to the social network for posting on the social network (15) for use by another person to obtain content information about the content.

2. The method of claim 1, wherein said obtaining comprises preparing a unique identifier that identifies the location of the content information.

3. The method of any of claims 1-2, wherein the portable electronic device (10) includes storage (12) for media as the content, and wherein said selecting comprises selecting media stored in the portable electronic device (10).

4. The method of any of claims 1-3, wherein the portable electronic device (10) includes a local database (43), and said obtaining comprises obtaining from the local database a unique identifier or information to prepare a unique identifier.

5. The method of any of claims 1-3, wherein the content comprises sounds sensed by the portable electronic device (10), and said unique identifier identifies a location of the sensed sounds.

6. The method of claim 5, said preparing a unique identifier comprises preparing a fingerprint representative of the sensed sounds, and providing for comparing of the fingerprint against a database (45) to try to find a match.

7. The method of any of claims 1-6, wherein said selecting, obtaining and sending are carried out using a mobile telephone, and said sending comprising sending via a network, sms (short message service), or email.

8. A portable electronic device (10), comprising
a processor (11),
a non-transistory memory (12),
application code stored in the non-transitory memory (12),
wherein the processor (11) is configured to respond to the application code to respond to a LIKE input (16) associated with a social network (15) that indicates that a user of the portable electronic device (10) liked the content to provide a first URL, or ID, identification,
the processor is further configured to obtain, based on the first URL or ID, a second unique URL or ID, different from the first URL or ID, from a database, that identifies the location of the content information to obtain content information about the liked content, where the content information is to be shared via the social network (15), and
the processor (11) further configured to provide the second unique URL or ID of the liked content from the portable electronic device to the social network for posting on the social media network (15), via a link, for access by one or more other persons to the content information.

9. The device of claim 8, further comprising an input for a user to provide a LIKE indication to indicate liking a content.

10. The device of either of claims 8 or 9, further comprising a media player (10a) and wherein the content is music playable by the media player (10a).

11. The device of any of claims 8-10, wherein the processor (11) is configured to create the unique URL or ID.

## Patentansprüche

1. Verfahren zur Teilung von Inhaltsinformationen über einen Inhalt mittels einer tragbaren elektronischen Einrichtung (10), umfassend
Auswählen (1) einer mit einem sozialen Netzwerk (15) zusammenhängenden "Gefällt mir"("LIKE")-Funktion (16), die über die tragbare elektronische Einrichtung (10) bereitgestellt wird, um anzugeben, dass der Inhalt, auf den sich die über das soziale Netzwerk (15) zu teilende Inhaltsinformation bezieht, vom Benutzer der tragbaren elektronischen Einrichtung (10) befürwortet wird;
Erlangen (2) eines ersten Identifikators des befürworteten Inhalts an der tragbaren elektronischen Einrichtung (10); basierend auf dem ersten Identifikator, Erlangen (3) eines zweiten eindeutigen Identifikators, der sich vom ersten Identifikator unterscheidet und der den Ort der Inhaltsinformation identifiziert, von einer Datenbank; und
Senden (5) des zweiten eindeutigen Identifikators des befürworteten Inhalts von dem tragbaren elektronischen Gerät zum sozialen Netzwerk, um ihn in das soziale Netzwerk (15) einzustellen, so dass andere Personen die Inhaltsinformation über den Inhalt nutzen können.

2. Verfahren nach Anspruch 1, wobei das Erlangen das Vorbereiten eines eindeutigen Identifikators umfasst, der den Ort der Inhaltsinformation identifiziert.

3. Verfahren nach einem der Ansprüche 1 bis 2, wobei das tragbare elektronische Gerät (10) einen Speicher (12) für Medien als den Inhalt umfasst, und wobei das Auswählen das Auswählen von in dem tragbaren elektronischen Gerät (10) gespeicherten Medien umfasst.

4. Verfahren nach einem der Ansprüche 1 bis 3, wobei das tragbare elektronische Gerät (10) eine lokale Datenbank (43) umfasst, und das Er-langen das Erlangen eines eindeutigen Identifikators oder einer Information von der lokalen Datenbank umfasst, um einen eindeutigen Identifikator vorzubereiten.

5. Verfahren nach einem der Ansprüche 1 bis 3, wobei der Inhalt von dem tragbaren elektronischen Gerät (10) erkannte Töne umfasst und der eindeutige Identifikator einen Ort der erkannten Töne identifiziert.

6. Verfahren nach Anspruch 5, wobei das Vorbereiten eines eindeutigen Identifikators das Vorbereiten eines die erkannten Töne darstellenden Fingerabdrucks umfasst sowie das Bereitstellen des Fingerabdrucks für einen Vergleich mit einer Datenbank (45), um zu versuchen, eine Übereinstimmung zu finden.

7. Verfahren nach einem der Ansprüche 1 bis 6, wobei Auswählen, Erlangen und Senden mittels eines Mobiltelefons erfolgt und das Senden das Senden per Netzwerk, SMS (Short Message Service) oder E-Mail umfasst.

8. Tragbares elektronisches Gerät (10), umfassend
einen Prozessor (11),
einen nichtflüchtigen Speicher (12),
im nichtflüchtigen Speicher (12) gespeicherten Anwendungs-code,
wobei der Prozessor (11) dafür konfiguriert ist, als Reaktion auf den Anwendungscode auf eine mit einem sozialen Netzwerk (15) zusammenhängende "LIKE"-Eingabe (16), die angibt, dass ein Benutzer des tragbaren elektronischen Geräts (10) den Inhalt befürwortet hat, zu antworten, um eine erste URL- oder ID-Identifikation bereitzustellen,
wobei der Prozessor weiterhin dafür konfiguriert ist, basierend auf der ersten URL oder ID aus einer Datenbank eine zweite eindeutige URL oder ID zu erlangen, die sich von der ersten URL oder ID unterscheidet und die den Ort der Inhaltsinformation identifiziert, um eine Inhaltsinformation über den befürworteten Inhalt zu erhalten, wobei die Inhaltsinformation über das soziale Netzwerk (15) zu teilen ist, und
wobei der Prozessor (11) weiterhin dafür konfiguriert ist, die zweite eindeutige URL oder ID des befürworteten Inhalts von dem tragbaren elektronischen Gerät ausgehend dem sozialen Netzwerk bereitzustellen, um sie über eine Verknüpfung in das soziale Mediennetzwerk (15) einzustellen, so dass eine oder mehrere Personen auf die Inhaltsinformation zugreifen können.

9. Gerät nach Anspruch 8, weiterhin umfassend eine Eingabemöglichkeit für einen Benutzer, um einen "LIKE"-Hinweis bereitzustellen und die Befürwortung eines Inhalts anzugeben.

10. Gerät nach einem der Ansprüche 8 oder 9, weiterhin umfassend eine Medienwiedergabeeinrichtung (10a), wobei der Inhalt von der Medienwiedergabeeinrichtung (10a) abspielbare Musik ist.

11. Gerät nach einem der Ansprüche 8 bis 10, wobei der Prozessor (11) dafür konfiguriert ist, eine eindeutige URL oder ID zu erzeugen.

## Revendications

1. Procédé de partage d'informations de contenu relatives à un contenu à l'aide d'un équipement électronique portable (10), comprenant
la sélection (1) d'une fonction « j'aime » (16) associée à un réseau social (15) qui est fourni par le biais de l'équipement électronique portable (10) afin d'indiquer que le contenu à propos duquel les informations de contenu doivent être partagées par l'intermédiaire du réseau social (15) est aimé par un utilisateur de l'équipement électronique portable (10) ;
l'obtention (2) au niveau de l'équipement électronique portable (10) d'un premier identifiant du contenu aimé ;
sur la base du premier identifiant, l'obtention (3) à partir d'une base de données d'un second identifiant unique, différent du premier identifiant, qui identifie la localisation des informations de contenu ; et
l'envoi (5) du second identifiant unique du contenu aimé depuis le dispositif électronique portable au réseau social pour publication sur le réseau social (15) à des fins d'utilisation par une autre personne pour obtenir des informations de contenu relatives au contenu.

2. Procédé selon la revendication 1, dans lequel ladite obtention comprend la préparation d'un identifiant unique qui identifie la localisation des informations de contenu.

3. Procédé selon l'une quelconque des revendications 1 à 2, dans lequel le dispositif électronique portable (10) comprend un stockage (12) pour des médias tels que le contenu et dans lequel ladite sélection comprend la sélection du média mémorisé dans le dispositif électronique portable (10).

4. Procédé selon l'une quelconque des revendications 1 à 3, dans lequel le dispositif électronique portable (10) comprend une base de données locale (43) et ladite obtention comprend l'obtention, à partir de la base de données locale, d'un identifiant unique ou d'informations destinées à préparer un identifiant unique.

5. Procédé selon l'une quelconque des revendications 1 à 3, dans lequel le contenu comprend des sons détectés par le dispositif électronique portable (10) et ledit identifiant unique identifie une localisation des sons détectés.

6. Procédé selon la revendication 5, ladite préparation d'un identifiant unique comprenant la préparation d'une empreinte représentative des sons détectés et la fourniture pour comparaison de l'empreinte à une base de données (45) afin de tenter de trouver une correspondance.

7. Procédé selon l'une quelconque des revendications 1 à 6, dans lequel lesdits sélection, obtention et envoi sont réalisés à l'aide d'un téléphone mobile et ledit envoi comprend l'envoi par le biais d'un réseau, d'un sms (service de message court) ou d'un courrier électronique.

8. Dispositif électronique portable (10), comprenant
un processeur (11),
une mémoire non transitoire (12),
un code d'application mémorisé dans la mémoire non transitoire (12),
dans lequel le processeur (11) est configuré pour répondre au code d'application afin de répondre à une entrée « J'AIME » (16) associée à un réseau social (15) qui indique qu'un utilisateur du dispositif électronique portable (10) a aimé le contenu afin de fournir une première identification, URL ou ID,
le processeur est en outre configuré pour obtenir, sur la base de la première URL ou ID, une seconde URL ou ID unique, différente de la première URL ou ID, à partir d'une base de données, qui identifie la localisation des informations de contenu afin d'obtenir les informations de contenu relatives au contenu aimé, les informations de contenu devant être partagées par le biais du réseau social (15) et
le processeur (11) configuré en outre pour fournir la seconde URL ou ID unique du contenu aimé du dispositif électronique portable au réseau social à des fins de publication sur le réseau de média social (15), par l'intermédiaire d'un lien, pour qu'une ou plusieurs autres personnes accèdent aux informations de contenu.

9. Dispositif selon la revendication 8, comprenant en outre une entrée pour qu'un utilisateur fournisse une indication « J'AIME » pour indiquer qu'il aime un contenu.

10. Dispositif selon l'une quelconque des revendications 8 ou 9, comprenant en outre un lecteur multimédia (10a) et dans lequel le contenu est une musique pouvant être lue par le lecteur multimédia (10a).

11. Dispositif selon l'une quelconque des revendications 8 à 10, dans lequel le processeur (11) est configuré pour créer l'URL ou ID unique.
